Europäisches Patentamt

European Patent Office

Office européen des brevets

(11) Publication number: **0 015 746**
A1

# EUROPEAN PATENT APPLICATION

(21) Application number: 80300669.1

(22) Date of filing: 05.03.80

(51) Int. Cl.³: **B 23 K 35/40**, B 23 K 35/10

(30) Priority: 13.03.79 GB 7908753

(43) Date of publication of application: 17.09.80 Bulletin 80/19

(84) Designated Contracting States: AT BE CH DE FR GB IT LU NL SE

(71) Applicant: N.V. BEKAERT S.A., Leo Bekaertstraat 1, B-8550 Zwevegem (BE)

(72) Inventor: Vandenbroucke, Gilbert, Kortrijkstraat 206, B-8550 Zwevegem (BE)

(74) Representative: Parker, Jeffrey et al, Frank B. Dehn & Co. Imperial House 15-19 Kingsway, London, WC2B 6UZ (GB)

(54) Welding electrode and method for manufacturing the same.

(57) A method of continuously manufacturing a welding electrode comprises coating a metal core member 1 with a filler material in the form of a layer of coherent paste 4 under substantial pressure, passing the coated core through a drying kiln 7 and then bringing an outer metal strip 11 into contact with the coated core member and deforming it around the coated core to form a tubular sheath, and finally closing the joint in the sheath by a continuous welding operation.

EP 0 015 746 A1

ACTORUM AG

- 1 -

## "WELDING ELECTRODE"

This invention relates to the manufacture of welding electrodes of the kind which comprise a metal core member, an outer tubular sheath, and a filler material between the core and the sheath. Electrodes of this kind are particularly suitable for use in automatic welding.

In known technology the said sheath is formed of a bent strip pressed or welded together at the seam. The sheath contains a filler material in the form of a powder whose nature depends on the type, dimensions and intended use of the electrode. Provision of such a filler material improves the weld quality, diminishes heat losses in the welding zone, avoids atmospheric contamination, improves the electric arc stability and the metal yield, and reduces splashes. It may contain alloying metal particles.

In one known process the filler is introduced into the tubular sheath after closing and winding up the tube on a reel, by feeding the powder through a screw driven hopper into the upper end of the tube. Vibration is applied to urge the powder to progress through the whole tube length. A metal core member is not provided.

In another known process, the filler powder is fed into a trough formed before the tube is closed to form the sheath, and a metal strip is placed on the powder and located under the joint that is subsequently welded.

A metal core in the form of a crimped wire may be centrally introduced into such a trough together with the powder, to provide a higher metallic yield at a reduced electric current supply.

All these known methods use powder as a filler material and allow more or less continuous manufacture. However, the handling of powder is very difficult

- 2 -

0015746

because it disperses easily in air currents and adheres to metals in undesired places. Furthermore it is difficult to avoid segregation of the powder components, and some particles create pores in the weld seam when closing the tubular sheath. Handling powders involves the riks of segregation of light from heavy particles and needs a supplementary agglomerating operation.

Extruded external powder layers on electrode rods are only practicable in short lengths, in order to permit the supply of electric current to the metal core. These powder layers are moreover easily contaminated, for example, by atmospheric moisture. It is already known to cover a core with a paste, but this is obtained by dipping the core in a paste at nearly atmospheric pressure. No substantial reduction in cross-section is envisaged afterwards.

It is an object of the invention to provide an improved method of continuously manufacturing a welding electrode, which does not suffer from the aforementioned drawbacks.

This is achieved according to the present invention by providing a method of continously manufacturing a welding electrode of the kind described comprising coating the metal member with a filler material in the form of a coherent paste in a continuous extrusion operation under substantial pressure, drying the extruded paste in a drying kiln after the coating operation, deforming a metal strip around the coated core member to provide a tubular sheath,and closing the joint in the outer metal sheath by a continuous welding operation.

The cross-sectional area of the product will then preferably be substantially reduced to provide an electrode with a diminished cross-section at a reasonable price. This can be done by rolling or hammering but preferably by cold drawing. An overall cross-section reduction of 20% is a minimum and of 40% is a regular condition.

0015746

- 3 -

The metallic core member can comprise a single round wire of suitable size or a strand of wires of different sizes and also of different metals or alloys. A core strand can be unidirectionally twisted or have an S-Z twist, and can contain metal elements providing electrical contact between the core and the outer sheath, preferably at regular intervals.

The core can contain one or more crimped wires or can also contain one or more wires helicoidally deformed in the manner of a spring. The core wires (2 to 5) can be loosely twisted together so that the metal core member shows an increased extensibility from e.g. 3% to 5% at breaking load.

In a preferred embodiment of the invention all of the metal components are deformable. Alternatively, when the core member consists of a strand having a plurality of wires, it is possible to combine individual wires of different composition and of deformable structure so that the outer metal sheath, together with the core member and metallic particles dispersed in the filler, alloy together to form a metallic substance of substantially undeformable nature.

Embodiments of the invention will now be described by way of example with reference to the accompanying drawings, in which:-

Figure 1 is a schematic view of an apparatus for carrying out an embodiment of a method according to the invention;

Figure 2 is a sectional view of an electrode produced by a method according to the invention;

Figure 3 is a sectional view of an electrode with a stranded core member produced by a method according to the invention;

Figure 4 is a perspective view of a stranded core member with metallic inserts forming part of an electrode produced by a method according to the invention.

0015746

- 4 -

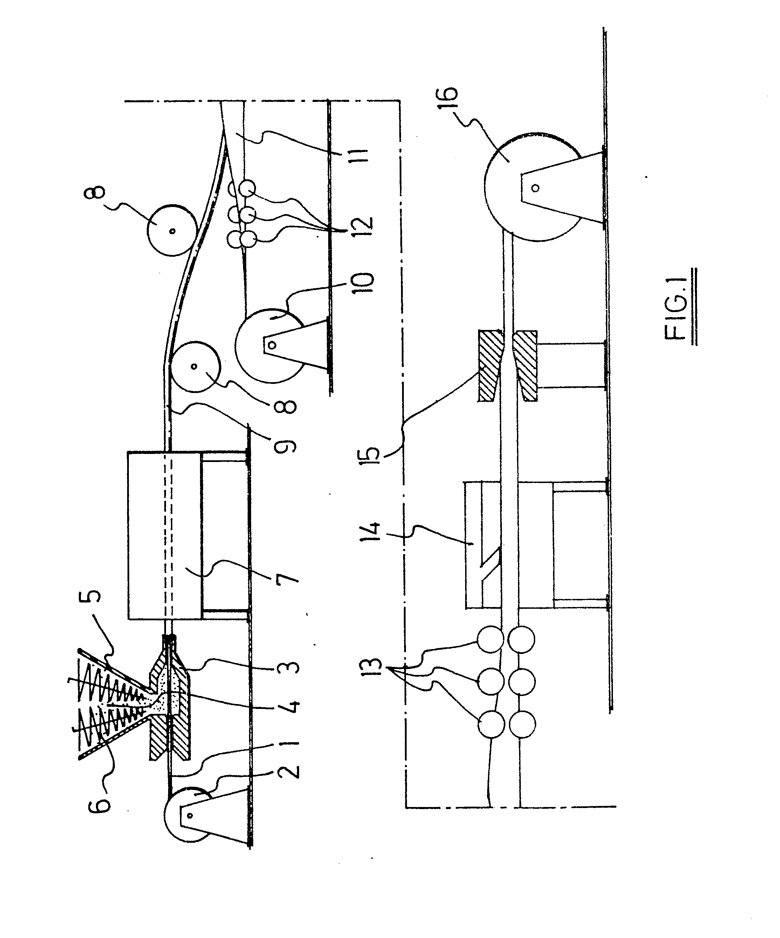

As shown in Figure 1, a core wire is drawn from a supply spool 2 of unalloyed low carbon steel wire and is guided through an extrusion head 3 in which a powder filler material 4 is fed from a hopper 5 and compacted by a double screw 6 as a paste which covers the wire surface. This paste is subsequently baked to form a coherent layer in a drying kiln 7, whereafter two guiding wheels 8 smoothly bring the continuously coated wire 9 to a lower level.

If desired the continuous operation can be modified whereby the coating paste is baked in a drying kiln batchwise, for a suitable period of time.

A second supply spool 10 contains a low carbon steel flat strip 11 of suitable width which is transversely bent into the form of a trough by forming rollers 12, whereafter the coated wire 9 is led into the trough and then completely enclosed by forming the strip into a tube by means of pressure rollers 13. The joint in the tube is sealed by a welding operation at welding station 14 and the product is subsequently cold drawn in die 15 into a smaller cross-section and wound on a take-up spool 16.

The welding operation consists preferably of a T.I.G. (tungsten inert gas) welding operation, but different methods are also applicable such as resistance welding, welding by high frequency currents, and hot pressure welding. It is obvious that in continuous operations an electrical welding method is more suitable and controllable.

This manufacturing method was suitable to cover a 1.6 mm wire with a suitable powder coating of 0.5 mm thickness and subsequently with a strip of 0.2 mm thickness and a width of 8.3 mm which was sealed by T.I.G. welding operation. This product was subsequently cold drawn through hard metal dies in six steps of about 27% reduction of cross-section each, to obtain a final size of 1.195 mm.    The final thickness of the sheath
was 0.12 mm, and the final size of the core wire was
0.65 mm which means that the reduction was nearly
proportional for the core and surrounding layers.

In another similar example, a core wire of 2,00 mm
mild steel was covered by extrusion with a paste at a
pressure of about 30 MPA.  This layer was dried in a
kiln for 1 hour at 200°C in order to obtain a coherent
layer with some porosity still existing.  The extruded
wire was subsequently covered with a 1 mm thick sheath
of mild steel, carefully welded to a tight tube so that
a 9 mm thick rod was obtained.  In 8 subsequent passes
of about 25% cross-section reduction each, this rod
was drawn to a size of 2,86 mm annealed for 2 hours at
680°C and drawn again in 6 subsequent passes of about
25% to a size of 1,80 mm.  In the final stage the wall
thickness was 0,20 mm and the core wire 0,36 mm.  This
electrode was suitable for welding.

The pressure at extrusion is very important and
could be between 15 and 150 MPA and more preferably
between 25 and  70 MPA.  Low pressures do not provide
a sufficiently uniform and coherent layer after drying
and high pressures show a too low porosity to allow
further substantial deformation.  Proper extrusion
conditions allow also a regular and correct filling
ratio which is important to obtain a satisfactory
stability of the electrical arc.  At least during
the extrusion, the filler material should be brought
into a pasty fluid state.

The temperatures in the kiln should be higher than
100°C and preferably about 200°C in order to have a
short processing time and to remove moisture completely.
The core member will be a suitable carrier during this
operation and provide regularity of the extrusion
operation.

The paste can contain the same  elements as the
conventional extruded electrodes.  The physical and geometrical features of the particles in the paste are of great importance as well as the interaction with the moistening agent.

A too great amount of metallic components and -oxides has to be avoided in order to ensure a sufficiently smooth deformation. Changes may be effected by another deformation ratio or changing the relative cross-section of core and sheath. Otherwise an intermediate annealing procedure may be necessary.

The weld must necessarily be tight in order to permit further wet preparation of the sheath surface for coating purposes, i.e. lubrication or corrosion protection, without risk of contamination of the inner paste by moisture or other elements in the processing medium.

It is obvious that for different situations the electrode design has to be adapted in accordance with the principles mentioned herein and the man skilled in the art will be able to act accordingly.

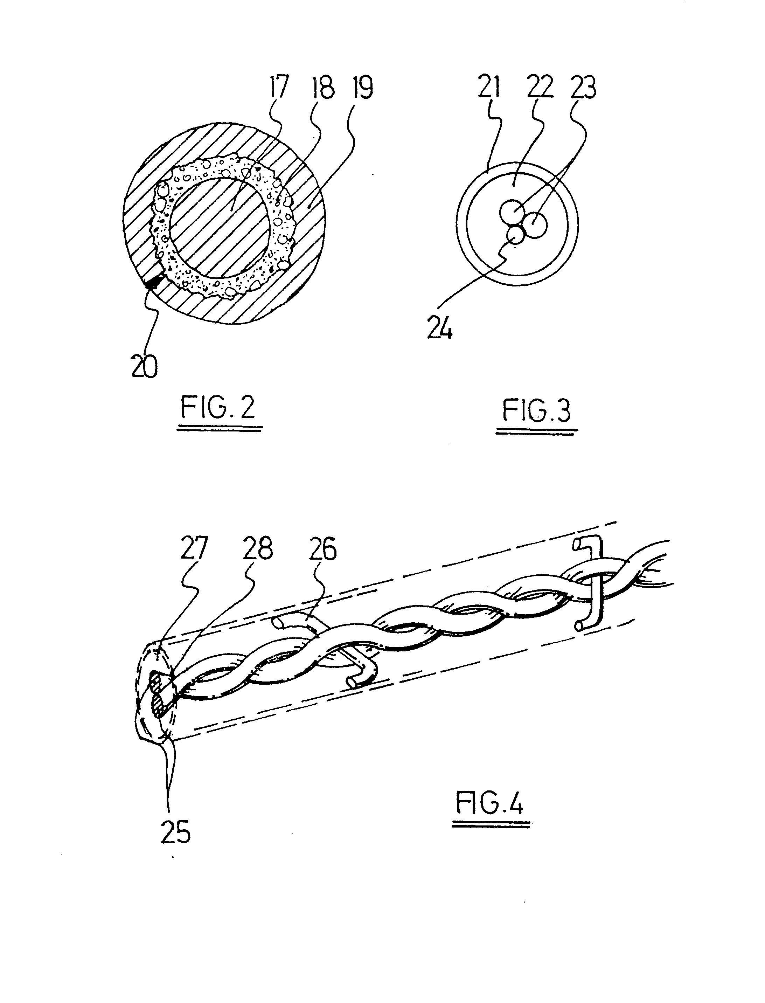

An electrode made by the method of the invention is shown in Fig. 2. The core 17 is surrounded by filler 18 and a sheath 19 welded at 20. The nature of the filler is selected according to factors previously mentioned, such as the intended use of the electrode. The proportion of cross-section between the metal core wire 17 and the sheath 19 can be varied. The proportion can be greater than 1, equal to 1 or less than 1. When this proportion is high, the sheath is relatively easily melted down and the electrode will behave similarly to a powder sheathed rod. On the other hand, if this proportion is low, the core wire will melt down more quickly and the electrode will behave similarly to a powder cored tubular electrode.

Figure 3 shows the cross-section of an electrode made in accordance with the invention, with an outer sheath 21 of stainless steel SAE 302, a filler 22 and a strand core consisting of two wires 23 of SAE 316 stainless steel and an additional wire 24 of nickel.

In the figure 4 embodiment a core strand consisting of two thin wires 25 carries short wire inserts 26, introduced into the strand with the ends bent over so that they provide a metallic contact through the filler layer 27 to the outer metal sheath 28. The short wire inserts can be provided at regular intervals.

An additional protective layer, still providing electrical conductivity, can be provided on the outer surface of the electrode, e.g. a uniform covering layer, at most 3 um thick, containing $FE_3O_4$. Obviously all types of deformable metals and alloys may be used to manufacture welding electrodes according to the invention in combination with an appropriate filler material.

It will be understood that an electrode obtained by a method according to the invention can be used in welding methods other than those using electrical current to melt the electrode material.

The method of the invention, at least in its preferred and illustrated embodiment, obviates or at least reduces the disadvantages mentioned hereinbefore in connection with known methods, and makes it possible to provide a welding electrode with a filler material of any desired composition and which can be both manufactured and used in continuous fashion and in practically unlimited lengths.

0015746

- 8 -

<u>CLAIMS</u>

1.   A method of continuously manufacturing a welding electrode of the kind comprising a metal core member, an outer tubular metal sheath, and a filler material between the core and the sheath, characterised in that the method comprises coating the metal core member (1) with a filler material (4) in the form of a coherent paste in a continuous extrusion operation under substantial pressure, drying the extruded paste in a drying kiln (7) after the coating operation, deforming a metal strip (11) around the coated member (1) to provide a tubular sheath, and closing the joint (20) in the outer metal sheath by a continuous welding operation.

2.   A method as claimed in claim 1, including extruding the filler material (4) upon  the metal core member (1) at a pressure of at least 15 MPA.

3.   A method as claimed in claim 2, including extruding the filler material (4) upon the metal core member (1) at a pressure between 25 and 70 MPA.

4.   A method as claimed in claim 1,2 or 3, including the further step of reducing the cross-sectional area of the product.

5.   A method as claimed in claim 4, including effecting the said reduction at least partially by a cold drawing operation.

6.   A method as claimed in any preceding claim, including twisting at least two wires (25) together to form the metal core member.

7.   A method as claimed in claim 6, in which the core strand carries metal elements (26) arranged to provide electrical contact between the core and the sheath.

8.   A welding electrode made by a method as claimed in any of claims 1 to 7.

0015746

FIG.1

FIG.2

FIG.3

FIG.4

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| | <u>DE - C - 747 800</u> (FINSPONGS METALLVERKS) <br> * Claim; figures; page 2, lines 39-98 * <br><br>-- | 1,4-6, 8 | B 23 K 35/40 <br> 35/10 |
| | <u>FR - A - 535 991</u> (THOMSON-HOUSTON) <br> * Figures 1,3; page 1, line 86 to page 4, line 20 * <br><br>-- | 1,5,8 | |
| | <u>FR - A - 982 956</u> (R. SARAZIN) <br> * Abstract, points 1,3; figures* <br><br>-- | 1,6-8 | **TECHNICAL FIELDS SEARCHED (Int.Cl. 3)** <br><br> B 23 K |
| A | <u>FR - A - 2 158 621</u> (LA SOUDURE AUTOGENE FRANCAISE) | | |
| A | <u>BE - A - 675 192</u> (ZENTRALINSTITUT FUR SCHWEISSTECHNIK DER DDR) <br><br>---- | | |

| X | The present search report has been drawn up for all claims | | |
|---|---|---|---|
| Place of search <br> The Hague | Date of completion of the search <br> 13-06-1980 | Examiner <br> MOLLET | |